# EUROPEAN PATENT SPECIFICATION

(11) **EP 3 681 853 B1**
(45) Date of publication and mention of the grant of the patent: **06.08.2025**
(21) Application number: 18779930.9
(22) Date of filing: 13.09.2018
(51) Int. Cl.: C05G 3/90

(54) **COMPOSITIONS COMPRISING A SOLVENT AND A CROP NUTRITION ACTIVE INGREDIENT**
ZUSAMMENSETZUNGEN MIT EINEM LÖSUNGSMITTEL UND EINEM PFLANZENNÄHRENDEN WIRKSTOFF
COMPOSITIONS COMPRENANT UN SOLVANT ET UN INGRÉDIENT ACTIF DE NUTRITION DE CULTURE

(30) Priority: 14.09.2017 US 201762558551 P
(43) Date of publication of application: 22.07.2020
(73) Proprietor: AdvanSix Resins & Chemicals LLC, Parsippany, NJ 07054 (US)
(72) Inventor: ASIRVATHAM, Edward, Parsippany New Jersey 07054 (US); FLORES-VASQUEZ, Jaime A., Parsippany New Jersey 07054 (US); MOUDGIL, Karttikay, Parsippany New Jersey 07054 (US); STRZELECKI, Mary, Parsippany New Jersey 07054 (US); TALEBI, Farzaneh, Parsippany New Jersey 07054 (US)
(74) Representative: Crooks, Elizabeth Caroline
(86) International application number: PCT/US2018/050819
(87) International publication number: WO 2019/055611

(56) References cited:
- WO-A1-2005/092953
- DD-A1- 266 105
- DE-A1- 19 901 944
- FLAVIAN CUIBAN ET AL: "N-Substituted derivatives of [epsilon]-caprolactam and their thermal and chemical behavior", ARKIVOC, 8 March 2002 (2002-03-08), pages 56 - 63, XP055535783, Retrieved from the Internet <URL:https://www.arkat-usa.org/get-file/20165/> [retrieved on 20181218], DOI: 10.3998/ark.5550190.0003.206

## Description

### FIELD

The present disclosure relates to compositions for crop nutrition. In particular, the disclosure relates to compositions including urease inhibitors and to methods of making and using such compositions.

### BACKGROUND

Urea is a widely used fertilizer for crop production. Urea is typically applied in liquid or granular form to provide nitrogen to the soil. Once applied to the soil, the urea hydrolyzes, producing ammonia and carbon dioxide. Bacteria or fungi in the soil can produce the enzyme urease, which catalyzes and accelerates the hydrolysis of the urea. This accelerated conversion of urea to ammonia and carbon dioxide results in a significant loss of much of the nitrogen from the urea as the gaseous ammonia volatilizes into the atmosphere. The high levels of gaseous ammonia produced at or proximate to the soil can damage seedlings and young plants.

Crop nutrition active ingredients can be added to the soil to inhibit and slow this process, preserving more of the nitrogen from the urea in the soil for use in crop production and protecting the plants from high levels of gaseous ammonia. Two such crop nutrition active ingredients are urease inhibitors and nitrification inhibitors. Urease inhibitors act by inhibiting the action of urease, slowing the rate of hydrolization of the urea. The urease inhibitors most commonly used as a crop nutrition active ingredient are N-(n-butyl) thiophosphoric triamide (NBPT), N-(n-propyl) thiophosphoric triamide (NPPT). Nitrification inhibitors work by depressing the activity of bacteria in the soil to slow the oxidation of the nitrogen from ammonium to nitrate. Nitrate is more easily lost from the soil than ammonium. Examples of nitrification inhibitors include dicyandiamide (DCD) and nitrapyrin (2-chloro-6-(trichloromethyl)-pyridine). In some cases, both a urease inhibitor and a nitrification inhibitor may be applied.

Some important crop nutrition active ingredients, for example NBPT, are soluble in organic solvents, but have low solubility in water. Such crop nutrition active ingredients may also be sensitive to decomposition in the presence of water. Shortly before use, compositions including one or more organic solvents and crop nutrition active ingredients dissolved in the solvents can be added to water to dilute the crop nutrition active ingredient to a useful concentration. The crop nutrition active ingredient can then be sprayed on urea-containing fields. Alternatively, shortly before use, the urea and the composition including the crop nutrition active ingredient and the solvents can be added to the water and the crop nutrition active ingredient and the urea applied to the fields together. The organic solvents should be miscible in water. The organic solvents maintain the crop nutrition active ingredients in solution, preventing any solid separation or crystallization of the crop nutrition active ingredient which could clog spray nozzles.

It is beneficial that the one or more solvents in the composition are able to readily dissolve the crop nutrition active ingredients, especially at higher crop nutrition active ingredients concentrations desirable in such compositions. In some cases, the one or more solvents include N-methyl-2-pyrrolidone (NMP) or isophorone. NMP and isophorone are excellent solvents for many of the most difficult to dissolve crop nutrition active ingredients. However, NMP has been found to be a reproductive toxin and isophorone is a suspected carcinogen. What is needed is a solvent that readily dissolves crop nutrition active ingredients and is neither a reproductive toxin nor a suspected carcinogen.

WO 2005/092953 A1 discloses the use of N-methylcaprolactam as a solvent, diluent, extraction agent, cleaning agent, degreasing agent, absorbing agent and/or dispersing agent, particularly as a partial or full substitute for NMP, chloridized hydrocarbons and/or ether.

DE 199 01 944 A1 discloses the use of biodegradable natural lignin- and/or lignocellulose-based material to inhibit leaching of agrochemicals in soil.

### SUMMARY

The present invention concerns a composition including a crop nutrition active ingredient and first solvent that mitigates or eliminates disadvantages associated with traditional solvents. The first solvent includes N-ethylcaprolactam. The composition may be useful applying the crop nutrition active ingredient to field in which crops are planted or to fields in which crops are to be planted. The composition is a concentrate that may be mixed with water to provide a useful concentration for application to fields. The composition has been found to be stable in storage at both reduced and elevated temperatures. The composition has demonstrated storage stability comparable to NMP. As defined herein, stability at reduced temperatures means that no freezing or precipitation of the composition is observed. As defined herein, stability at elevated temperatures means that the concentration of the crop nutrition active ingredient in the composition does not decrease by more than 10% of the initial concentration.

The present invention provides a composition including a first solvent and a crop nutrition active ingredient dissolved in the first solvent. The first solvent includes N-ethylcaprolactam.

A concentration of the first solvent may be from 5 weight percent to 50 weight percent of the composition.

The crop nutrition active ingredient may include at least one selected from the group of a urease inhibitor and a nitrification inhibitor. The crop nutrition active ingredient may include the urease inhibitor, the urease inhibitor including at least one selected from the group of N-(n-butyl) thiophosphoric triamide and N-(n-propyl) thiophosphoric triamide. The crop nutrition active ingredient may consist of N-(n-butyl) thiophosphoric triamide. The crop nutrition active ingredient may include the nitrification inhibitor, the nitrification inhibitor including at least one selected from the group of dicyandiamide and 2-chloro-6-(trichloromethyl)-pyridine.

A concentration of the crop nutrition active ingredient may be from 5 weight percent to 75 weight percent of the composition. A concentration crop nutrition active ingredient may be from 20 weight percent to 30 weight percent of the composition.

When stored at 4°C, the composition may be stable for at least 13 days. When stored at 50°C, the composition may be stable for at least 34 days.

The composition may further include a surfactant. The surfactant may include at least one selected from the group of ethoxylated glycerin/fatty acid esters, glycerol monooleate, glycerol dioleate, PEG alkoxylated block polymers, alkoxylated alcohols, alkoxylated alkylphenols, alkoxylated amines, alkoxylated amides, alkoxylated fatty esters, alkoxylated oils, fatty esters, alkoxylated fatty acids, sorbitan derivatives, alkylaryl sulfonates, alkylaryl sulfonic acids, carboxylated alcohol ethoxylates, alkylphenol ethoxylates, carboxylic acids, diphenyl sulfonate derivatives, olefin sulfonates, phosphate esters, phosphorous organic derivatives, and quaternary surfactants.

The composition may further include a second solvent. The second solvent may include at least one selected from the group of diabasic esters, alkyl lactates, dioxolanes, glycols, glycol ethers, alkylene carbonates, and alkoxyalcohols. A concentration of the second solvent may be from 15 weight percent to 70 weight percent of the composition.

In another form thereof, the present disclosure provides a composition including a first solvent, a crop nutrition active ingredient dissolved in the first solvent, a second solvent, and a surfactant. The first solvent includes a caprolactam-derived solvent which includes N-ethylcaprolactam.

The crop nutrition active ingredient may include at least one of: a urease inhibitor and a nitrification inhibitor. The crop nutrition active ingredient may include the urease inhibitor, the urease inhibitor including at least one of: N-(n-butyl) thiophosphoric triamide and N-(n-propyl) thiophosphoric triamide. The crop nutrition active ingredient may consist of N-(n-butyl) thiophosphoric triamide. The crop nutrition active ingredient may include the nitrification inhibitor, the nitrification inhibitor including at least one of: dicyandiamide and 2-chloro-6-(trichloromethyl)-pyridine.

A concentration of the crop nutrition active ingredient may be from 5 weight percent to 75 weight percent of the composition. A concentration crop nutrition active ingredient may be from 20 weight percent to 30 weight percent of the composition.

The above mentioned and other features of the invention, and the manner of attaining them, will become more apparent and the invention itself will be better understood by reference to the following description of the disclosure.

### DETAILED DESCRIPTION

Compositions of the disclosure employ N-ethylcaprolactam to replace traditional solvents, such as NMP or isophorone, for example, in compositions including crop nutrition active ingredients. The basis of the caprolactam-derived solvents, caprolactam, has not been found to be, and is not expected to be, either a reproductive toxin or a carcinogen. Thus, N-ethylcaprolactam, is a significantly safer solvent than NMP and isophorone.

In addition, as shown in the examples below, the caprolactam-derived solvent, N-ethylcaprolactam, appears to be as effective as NMP and other commonly used solvents, such as methyl-5-(dimethylamino)-2-methyl-5-oxopentanoate and N-butyl-2-pyrrolidone, in dissolving crop nutrition active ingredients. As is known in the art, Hansen Solubility Parameters can be used to predict the effectiveness of a solvent. With respect to the dissolution of the crop nutrition active ingredients, one skilled in the art would expect the polarity and hydrogen bonding Hansen Solubility Parameters to be strongly predictive of the effectiveness of a solvent, with generally higher values corresponding to more effective solvents.

A comparison of the Hansen Solubility Parameters for N-ethylcaprolactam and some commonly used solvents is shown in Table 1 below. Surprisingly, as shown in Table 1, the polarity and hydrogen bonding Hansen Solubility Parameters for N-ethylcaprolactam are significantly lower than those for the commonly used solvents. Thus, one skilled in the art would not expect N-ethylcaprolactam to be as effective as NMP and other commonly used solvents in dissolving crop nutrition active ingredients.

**Table 1**

| | **Hansen Solubility Parameters** | | |
|---|---|---|---|
| **Solvent** | **Dispersion** | **Polarity** | **Hydrogen Bonding** |
| **N-methylcaprolactam (Reference example)** | 17.9 | **7.6** | **5.7** |
| **N-ethylcaprolactam** | 17.7 | **6.7** | **5.2** |
| **N-butylcaprolactam (Reference example)** | 17.5 | **4.8** | **4.6** |
| N-methyl-2-pyrrolidone | 18.0 | 12.3 | 7.2 |
| N,N-dimethyladipamide methyl ester | 17.2 | 9.7 | 9.3 |
| methyl-5-(dimethylamino)-2-methyl-5-oxopentanoate | 15.8 | 10.7 | 9.2 |

Compositions of this disclosure may include a crop nutrition active ingredient and first solvent. The first solvent includes N-ethylcaprolactam.

Without wishing to be bound by any theory, it is believed that N-ethylcaprolactam is expected to be polar and aprotic to be able to dissolve crop nutrition active ingredients which have poor water solubility.

The crop nutrition active ingredients may include a urease inhibitor and/or a nitrification inhibitor. The crop nutrition active ingredient may consist of the urease inhibitor. Some non-limiting examples of common urease inhibitors that have poor water solubility and are suitable for use in compositions of this disclosure include: N-(n-butyl) thiophosphoric triamide (NBPT), N-(n-propyl) thiophosphoric triamide (NPPT), and an NBPT adduct formed from NBPT and urea, NBPT and formaldehyde, or NBPT, urea, and formaldehyde. The crop nutrition active ingredient may consist of NBPT.

Some non-limiting examples of common nitrification inhibitors that have poor water solubility and are suitable for use in compositions of this disclosure include: dicyandiamide (DCD) and nitrapyrin (2-chloro-6-(trichloromethyl)-pyridine).

The composition may further include a second solvent. The second solvent may include an aromatic hydrocarbon solvent, an aliphatic hydrocarbon solvent, or any combination thereof. Such solvents can be less expensive than the caprolactam-derived solvents and thus lower the overall cost of the composition. The second solvent may include diabasic esters, such as dimethyl esters of adipic, glutaric, and succinic acids, alkyl lactates, dioxolanes, glycols, glycol ethers, alkylene carbonates, alkoxyalcohols, or any combination thereof.

The composition may further include a surfactant. The surfactant may include ethoxylated glycerin/fatty acid esters such as ethoxylated glyceryl fatty acid esters (e.g., PEG 20 glyceryl laurate, PEG 20 glyceryl oleate, PEG 20 glyceryl oleoricinoleate, and PEG 20 glyceryl stearate), sorbitan esters and ethoxylated sorbitan esters (e.g., sorbitan monolaurate and sorbitan trioleate), glycerol monooleate, glycerol dioleate, PEG alkoxylated block polymers, alkoxylated alcohols, alkoxylated alkylphenols, alkoxylated amines, alkoxylated amides, alkoxylated fatty esters, alkoxylated oils, fatty esters, alkoxylated fatty acids, sorbitan derivatives, alkylaryl sulfonates, alkylaryl sulfonic acids, carboxylated alcohol ethoxylates, alkylphenol ethoxylates, carboxylic acids, diphenyl sulfonate derivatives, olefin sulfonates, phosphate esters, phosphorous organic derivatives, and quaternary surfactants, or any combination thereof.

Compositions of this disclosure may include a crop nutrition active ingredient, a first solvent, a second solvent, and a surfactant, each as described above. The composition may be formed by mixing together the components.

A concentration of the crop nutrition active ingredient as a weight percentage of the composition may be as low as 5 weight percent (wt. %), 8 wt. %, 11 wt. %, 14 wt. %, 17 wt. %, or 20 wt. %, or as high as 30 wt. %, 40 wt. %, 50 wt. %, 60 wt. %, 70 wt. % or 75 wt. %, or may be within any range defined between any two of the foregoing values, such as 5 wt. % to 75 wt. %, 8 wt. % to 70 wt. %, 11 wt. % to 60 wt. %, 14 wt. % to 50 wt. %, 17 wt. % to 40 wt. %, or 20 wt. % to 30 wt. %, for example.

A concentration of the first solvent as a weight percentage of the composition may be as low as 5 wt. %, 8 wt. %, 10 wt. %, 11 wt. %, 14 wt. %, or 17 wt. %, or as high as 26 wt. %, 30 wt. %, 32 wt. %, 38 wt. %, 44 wt. %, or 50 wt. %, or may be within any range defined between any two of the foregoing values, such as 5 wt. % to 50 wt. %, 8 wt. % to 44 wt. %, 10 wt. % to 30 wt. %, 11 wt. % to 38 wt. %, 14 wt. % to 32 wt. %, or 17 wt. % to 26 wt. %, for example.

A concentration of the surfactant as a weight percentage of the composition may be as low as 5 wt. %, 6 wt. %, 7 wt. %, 8 wt. %, or 9 wt. %, or as high as 11 wt. %, 12 wt. %, 13 wt. %, 14 wt. %, or 15 wt. %, or may be within any range defined between any two of the foregoing values, such as 5 wt. % to 15 wt. %, 6 wt. % to 14 wt. %, 7 wt. % to 13 wt. %, 8 wt. % to 12 wt. %, 9 wt. % to 11 wt. %, or 8 wt. % to 10 wt. %, for example.

A concentration of the second solvent as a weight percentage of the composition may be as low as 15 wt. %, 22 wt. %, 29 wt. %, 36 wt. %, 40 wt. %, or 43 wt. %, or as high as 50 wt. %, 55 wt. %, 60 wt. %, 65 wt. %, or 70 wt. %, or may be within any range defined between any two of the foregoing values, such as 15 wt. % to 70 wt. %, 22 wt. % to 65 wt. %, 20 wt. % to 60 wt. %, 36 wt. % to 55 wt. %, 40 wt. % to 50 wt. %, or 43 wt. % to 50 wt. %, for example.

Any of the compositions described above can be provided to a use location, such as a farm, and diluted on-site with water to a desired application concentration (otherwise known as a tank mixture). Upon dilution with water, the composition readily forms miscible mixture with the water with the crop nutrition active ingredient in solution in the tank mixture.

Once the tank mixture is prepared, the diluted composition may be applied to the fields in which the crops have been, or are to be, planted and to which urea has been applied. The diluted composition may be applied by, for example, spraying or dribbling on to the fields or injecting into the soil. Lines and spray nozzles used to apply the diluted composition are less likely to clog because the organic solvents maintain the crop nutrition active ingredients in solution, preventing any solid separation or crystallization of the crop nutrition active ingredient which could form clogs.

As used herein, the phrase "within any range defined between any two of the foregoing values" literally means that any range may be selected from any two of the values listed prior to such phrase regardless of whether the values are in the lower part of the listing or in the higher part of the listing. For example, a pair of values may be selected from two lower values, two higher values, or a lower value and a higher value.

### EXAMPLES

### Example 1 - NBPT Comparative Solubility

The solubility of the N-(n-butyl) thiophosphoric triamide (NBPT) was determined for thirteen solvents including N-ethylcaprolactam. The remaining solvents were comparative solvents. The NBPT was 98% (HPLC) obtained from AK Scientific, Inc., Union City, California. The N-methyl-2-pyrrolidone was at least 99% pure and obtained from Sigma Aldrich of St. Louis, Missouri. The N-butyl-2-pyrrolidone was at least 98% pure and obtained from TCI America of Portland, Oregon. The methyl-5-(dimethylamino)-2-methyl-5-oxopentanoate/propylene glycol was 70-90% pure and obtained from Solvay S.A. of Princeton, New Jersey.

The solubility of NBPT was evaluated for each solvent by preparing four, 2 ml vials containing 20 wt. %, 30 wt. %, 40 wt. % and 50 wt. % of NBPT. To prepare the 20 wt. % vial, 0.040 g of NBPT was added to 0.160 ml of solvent. To prepare the 30 wt. % vial, 0.060 g of NBPT was added to 0.140 ml of solvent. To prepare the 40 wt. % vial, 0.80 g of NBPT was added to 0.120 ml of solvent. To prepare the 50 wt. % vial, 0.100 g of NBPT was added to 0.100 ml of solvent. The vials were capped and swirled at room temperature until no change in solubility was observed.

The results are shown in Table 2 below. Table 2 shows the maximum weight percentage of NBPT dissolved in each solvent as described above. Solvent 2 is the N-ethylcaprolactam first solvent. Solvents 1 and 3 are reference solvents N-methyl caprolactam and N-butyl caprolactam. Solvents 4-13 are comparative solvents. As shown in Table 2, the N-methylcaprolactam and N-ethylcaprolactam performed as well as NMP. N-butylcaprolactam performed nearly as well as NMP.

**Table 2**

| | | |
|---|---|---|
| | **N-(n-butyl) thiophosphoric triamide** | |
| **1** | **N-methylcaprolactam (Reference example)** | **50%** |
| **2** | **N-ethylcaprolactam** | **50%** |
| **3** | **N-butylcaprolactam (Reference example)** | **40%** |
| 4 | N-methyl-2-pyrrolidone | 50% |
| 5 | N-butyl-2-pyrrolidone | 50% |
| 6 | N,N-dimethyldecanamide | 20% |
| 7 | N,N-dimethyladipamide methyl ester | 40% |
| 8 | methyl-5-(dimethylamino)-2-methyl-5-oxopentanoate | 30% |
| 9 | cyclohexanone | 40% |
| 10 | cyclohexyl methyl ether | < 20% |
| 11 | cyclohexyl acetate | < 20% |
| 12 | cyclohexyl butyrate | < 20% |
| 13 | N-(2-cyanoethyl)caprolactam | < 20% |

### Reference Example 2 - NBPT Comparative Stability at a Reduced Temperature

The stabilities of solutions of NBPT at a reduced temperature were determined for four solvents. In some cases, the solution also included a co-solvent of propylene glycol. One of the solvents was N-methyl caprolactam. The remaining three were comparative solvents. Solutions of NBPT were prepared for each solvent by slowly adding about 25 weight percent (wt.%) NBPT to about 75 wt.% of a solvent, or to a mixture of about 37.5 wt.% of a solvent and about 37.5 wt.% of propylene glycol. The propylene glycol was USP grade from Thermo Fisher Scientific Inc. of Waltham, Massachusetts. The solutions were mixed using a roller mill for approximately 2 hours. The solutions were filtered and the concentration of NBPT determined using High-Performance Liquid Chromatography (HPLC). Samples of the solutions were kept at 4°C for up to 13 days to evaluate their comparative stability at the reduced temperature. The results are shown in Table 3 below.

**Table 3**

| **Sample** | **Solvent/Co-solvent (if any)** | **NBPT Concentration (wt. %)** | **Freezing or Precipitation Observed** |
|---|---|---|---|
| 1 | **N-methylcaprolactam**/propylene glycol | 21.84% | None |
| 2 | N-methyl-2-pyrrolidone/propylene glycol | 22.29% | None |
| 3 | N-butyl-2-pyrrolidone/propylene glycol | 21.75% | After 13 days |
| 4 | methyl-5-(dimethylamino)-2-methyl-5-oxopentanoate/propylene glycol | 22.56% | After 1 day |
| 5 | **N-methylcaprolactam** | 21.14% | None |
| 6 | N-methyl-2-pyrrolidone | 22.32% | None |

As shown in Table 3, the N-methylcaprolactam solutions demonstrated solution stability comparable to the NMP solutions at 4°C. The comparable stability was observed with or without the propylene glycol co-solvent. The N-methylcaprolactam/propylene glycol solution demonstrated superior solution stability at 4°C compared to the N-butyl-2-pyrrolidone/propylene glycol solution and to the methyl-5(dimethylamine)-2-methyl-5-oxopentanoate/propylene glycol solution.

### Reference Example 3 - NBPT Comparative Stability at an Elevated Temperature

The stabilities of solutions of NBPT at an elevated temperature were determined using samples of the same solutions prepared in Example 2 above. The samples of the solutions were kept at 50°C for up to 13 days to evaluate their comparative stability at the elevated temperature. The concentration of NBPT in the solutions was determined periodically using HPLC. The results are shown in Tables 4 and 5 below.

**Table 4**

| **Sample** | **Solvent/Co-solvent (if any)** | **NBPT Concentration (wt. %)** | | | | |
|---|---|---|---|---|---|---|
| | | **Initial** | **Day 4** | **Day 12** | **Day 19** | **Day 33** |
| 1 | **N-methylcaprolactam/**propylene glycol | 21.84% | 22.10% | 22.39% | 21.80% | 21.45% |
| 2 | N-methyl-2-pyrrolidone/propylene glycol | 22.29% | 21.76% | 21.59% | 20.90% | 20.95% |
| 3 | N-butyl-2-pyrrolidone/propylene glycol | 21.75% | 21.32% | 21.14% | 21.28% | 21.07% |
| 4 | methyl-5-(dimethylamino)-2-methyl-5-oxopentanoate/propylene glycol | 21.56% | 21.47% | 22.1% | 21.16% | 21.16% |

**Table 5**

| **Sample** | **Solvent/Co-solvent (if any)** | **NBPT Concentration (wt. %)** | | | | | |
|---|---|---|---|---|---|---|---|
| | | **Initial** | **Day 1** | **Day 5** | **Day 13** | **Day 20** | **Day 34** |
| 5 | **N-methylcaprolactam** | 21.14% | 20.68% | 21.13% | 20.96% | 20.63% | 20.27% |
| 6 | N-methyl-2-pyrrolidone | 22.32% | 22.31% | 21.48% | 21.52% | 21.53% | 21.02% |

As shown in Tables 4 and 5, the N-methylcaprolactam solutions demonstrated solution stability comparable to the NMP solutions at 50°C. The comparable stability was observed with or without the propylene glycol co-solvent. The N-methylcaprolactam/propylene glycol solution also demonstrated comparable solution stability at 50°C compared to the N-butyl-2-pyrrolidone/propylene glycol solution and to the methyl-5(dimethylamine)-2-methyl-5-oxopentanoate/propylene glycol solution.

Although the above Examples 1-3 were conducted using NBPT, it is expected that NBPT adducts formed from NBPT and urea, NBPT and formaldehyde, or NBPT, urea, and formaldehyde would produce similar results.

## Claims

1. A composition comprising:
a first solvent, the first solvent including N-ethylcaprolactam; and
a crop nutrition active ingredient dissolved in the first solvent.

2. The composition of claim 1, wherein a concentration of the first solvent is from 5 weight percent to 50 weight percent of the composition.

3. The composition of any of claims 1 to 2, wherein the crop nutrition active ingredient includes at least one selected from the group of a urease inhibitor and a nitrification inhibitor.

4. The composition of claim 3, wherein the crop nutrition active ingredient includes the urease inhibitor, the urease inhibitor including at least one selected from the group of N-(n-butyl) thiophosphoric triamide and N-(n-propyl) thiophosphoric triamide.

5. The composition of either of claims 3 or 4, wherein the crop nutrition active ingredient includes the nitrification inhibitor, the nitrification inhibitor including at least one selected from the group of dicyandiamide and 2-chloro-6-(trichloromethyl)-pyridine.

6. The composition of any of claims 1-5, wherein a concentration of the crop nutrition active ingredient is from 5 weight percent to 75 weight percent of the composition.

7. The composition of any of claims 1-6, further including a surfactant.

8. The composition of claim 7, wherein the surfactant includes at least one selected from the group of ethoxylated glycerin/fatty acid esters, glycerol monooleate, glycerol dioleate, PEG alkoxylated block polymers, alkoxylated alcohols, alkoxylated alkylphenols, alkoxylated amines, alkoxylated amides, alkoxylated fatty esters, alkoxylated oils, fatty esters, alkoxylated fatty acids, sorbitan derivatives, alkylaryl sulfonates, alkylaryl sulfonic acids, carboxylated alcohol ethoxylates, alkylphenol ethoxylates, carboxylic acids, diphenyl sulfonate derivatives, olefin sulfonates, phosphate esters, phosphorous organic derivatives, and quaternary surfactants.

9. The composition of any of claims 1-8, further including a second solvent.

10. The composition of claim 9, wherein the second solvent includes at least one selected from the group of diabasic esters, alkyl lactates, dioxolanes, glycols, glycol ethers, alkylene carbonates, and alkoxyalcohols.

11. The composition of either of claims 9 or 10, wherein a concentration of the second solvent is from 15 weight percent to 70 weight percent of the composition.

## Patentansprüche

1. Zusammensetzung, umfassend:
ein erstes Lösungsmittel, wobei das erste Lösungsmittel N-Ethylcaprolactam umfasst, und
einen im ersten Lösungsmittel gelösten Pflanzenernährungswirkstoff.

2. Zusammensetzung nach Anspruch 1, wobei die Konzentration des ersten Lösungsmittels 5 Gew.-% bis 50 Gew.-% der Zusammensetzung beträgt.

3. Zusammensetzung nach Anspruch 1 oder 2, wobei der Pflanzenernährungswirkstoff mindestens einen aus der aus einem Ureasehemmer und einem Nitrifikationshemmer bestehenden Gruppe ausgewählten Wirkstoff umfasst.

4. Zusammensetzung nach Anspruch 3, wobei der Pflanzenernährungswirkstoff den Ureasehemmer umfasst, wobei der Ureasehemmer mindestens einen aus der aus N-(n-Butyl)thiophosphortriamid und N-(n-Propyl)thiophosphortriamid bestehenden Gruppe ausgewählten Wirkstoff umfasst.

5. Zusammensetzung nach Anspruch 3 oder 4, wobei der Pflanzenernährungswirkstoff den Nitrifikationshemmer umfasst, wobei der Nitrifikationshemmer mindestens einen aus der aus Dicyandiamid und 2-Chlor-6-(trichlormethyl)pyridin bestehenden Gruppe ausgewählten Wirkstoff umfasst.

6. Zusammensetzung nach einem der Ansprüche 1-5, wobei die Konzentration des Pflanzenernährungswirkstoffs 5 Gew.-% bis 75 Gew.-% der Zusammensetzung beträgt.

7. Zusammensetzung nach einem der Ansprüche 1-6, die weiterhin ein Tensid umfasst.

8. Zusammensetzung nach Anspruch 7, wobei das Tensid mindestens ein aus der aus ethoxylierten Glycerin/Fettsäureestern, Glycerinmonooleat, Glycerindioleat, PEG-alkoxylierten Blockpolymeren, alkoxylierten Alkoholen, alkoxylierten Alkylphenolen, alkoxylierten Aminen, alkoxylierten Amiden, alkoxylierten Fettsäureestern, alkoxylierten Ölen, Fettsäureestern, alkoxylierten Fettsäuren, Sorbitanderivaten, Alkylarylsulfonaten, Alkylarylsulfonsäuren, carboxylierten Alkoholethoxylaten, Alkylphenolethoxylaten, Carbonsäuren, Diphenylsulfonatderivaten, Olefinsulfonaten, Phosphatestern, phosphorhaltigen organischen Derivaten und quartären Tensiden bestehenden Gruppe ausgewähltes Tensid umfasst.

9. Zusammensetzung nach einem der Ansprüche 1-8, die weiterhin ein zweites Lösungsmittel umfasst.

10. Zusammensetzung nach Anspruch 9, wobei das zweite Lösungsmittel mindestens ein aus der aus dibasischen Estern, Alkyllactaten, Dioxolanen, Glykolen, Glykolethern, Alkylencarbonaten und Alkoxyalkoholen bestehenden Gruppe ausgewähltes Lösungsmittel umfasst.

11. Zusammensetzung nach Anspruch 9 oder 10, wobei die Konzentration des zweiten Lösungsmittels 15 Gew.-% bis 70 Gew.-% der Zusammensetzung beträgt.

## Revendications

1. Composition comprenant :
un premier solvant, le premier solvant comprenant du N-éthylcaprolactame ; et
un ingrédient actif nutritif des cultures dissous dans le premier solvant.

2. Composition selon la revendication 1, dans laquelle la concentration du premier solvant est de 5 pour cent en poids à 50 pour cent en poids de la composition.

3. Composition selon l'une quelconque des revendications 1 à 2, dans laquelle l'ingrédient actif nutritif des cultures comprend au moins un ingrédient choisi dans le groupe constitué par un inhibiteur d'uréase et un inhibiteur de nitrification.

4. Composition selon la revendication 3, dans laquelle l'ingrédient actif nutritif des cultures comprend l'inhibiteur d'uréase, l'inhibiteur d'uréase comprenant au moins l'un choisi dans le groupe constitué par le triamide N-(n-butyl)thiophosphorique et le triamide N-(n-propyl)thiophosphorique.

5. Composition selon l'une quelconque des revendications 3 ou 4, dans laquelle l'ingrédient actif nutritif des cultures comprend l'inhibiteur de nitrification, l'inhibiteur de nitrification comprenant au moins l'un choisi dans le groupe constitué par le dicyandiamide et la 2-chloro-6-(trichlorométhyl)-pyridine.

6. Composition selon l'une quelconque des revendications 1 à 5, dans laquelle la concentration de l'ingrédient actif nutritif des cultures est de 5 pour cent en poids à 75 pour cent en poids de la composition.

7. Composition selon l'une quelconque des revendications 1 à 6, comprenant en outre un tensioactif.

8. Composition selon la revendication 7, dans laquelle le tensioactif comprend au moins l'un choisi dans le groupe constitué par les esters de glycérine/acide gras éthoxylés, le monooléate de glycérol, le dioléate de glycérol, les polymères séquencés alcoxylés PEG, les alcools alcoxylés, les alkylphénols alcoxylés, les amines alcoxylées, les amides alcoxylés, les esters gras alcoxylés, les huiles alcoxylées, les esters gras, les acides gras alcoxylés, les dérivés du sorbitane, les alkylarylsulfonates, les acides alkylarylsulfoniques, les éthoxylates d'alcool carboxylé, les éthoxylates d'alkylphénol, les acides carboxyliques, les dérivés de diphénylsulfonate, les oléfines sulfonates, les esters de phosphate, les dérivés organiques du phosphore et les tensioactifs quaternaires.

9. Composition selon l'une quelconque des revendications 1 à 8, comprenant en outre un second solvant.

10. Composition selon la revendication 9, dans laquelle le second solvant comprend au moins un solvant choisi dans le groupe des esters diabasiques, des lactates d'alkyle, des dioxolanes, des glycols, des éthers de glycol, des carbonates d'alkylène et des alcoxyalcools.

11. Composition selon l'une quelconque des revendications 9 ou 10, dans laquelle la concentration du second solvant est de 15 pour cent en poids à 70 pour cent en poids de la composition.
